# EUROPEAN PATENT SPECIFICATION

(11) **EP 3 273 034 B1**
(45) Date of publication and mention of the grant of the patent: **01.01.2020**
(21) Application number: 17182102.8
(22) Date of filing: 19.07.2017
(51) Int. Cl.: F02C 3/107, F02C 3/14, F02C 6/20, F02C 7/32

(54) **A MULTI-SPOOL GAS TURBINE ENGINE ARCHITECTURE**
MEHRWELLIGE GASTURBINENTRIEBWERKSARCHITEKTUR
UNE ARCHITECTURE DE MOTEUR DE TURBINE MULTI-CORPS

(30) Priority: 19.07.2016 US 201662363955 P; 19.07.2016 US 201662363956 P; 19.07.2016 US 201662363952 P; 19.07.2016 US 201662363949 P; 19.07.2016 US 201662363947 P; 20.12.2016 US 201615384959; 17.01.2017 US 201715407423; 17.01.2017 US 201715407414; 17.01.2017 US 201715407445; 17.01.2017 US 201715407439
(43) Date of publication of application: 24.01.2018
(73) Proprietor: Pratt & Whitney Canada Corp., Longueuil, Québec J4G 1A1 (CA)
(72) Inventor: LEFEBVRE, Guy, Longueuil, Québec J4G 1A1 (CA)
(74) Representative: Dehns

(56) References cited:
- EP-A2- 2 226 487
- EP-A2- 2 320 067
- WO-A2-2015/122948

## Description

### TECHNICAL FIELD

The application relates generally to gas turbine engine and, more particularly, to a multi-spool engine architecture.

### BACKGROUND OF THE ART

WO 2015/122948 A2 discloses a prior art multi-spool gas turbine engine as set forth in the preamble of claim 11.

EP 2 226 487 A2 discloses a prior art variable drive gas turbine engine.

EP 320 067 A2 discloses a prior art aircraft starter generator.

Multi-spool gas turbine engines typically have a tower shaft for providing a drive input to an accessory gear box (AGB) asymmetrically mounted on a radially outer surface of the engine case. Such engine architecture may contribute to an increase in the diameter of the engine envelope. Also, the extension of the tower shaft through the gaspath may impact the engine's aerodynamic efficiency.

There is, thus, a need for improvement.

### SUMMARY

In one aspect, there is provided a reverse flow gas turbine engine as recited in claim 1.

In an embodiment of the above, the gear train coupling the LP shaft to the LP compressor and the AGB may share a common housing.

In a further embodiment of any of the above, the LP shaft may extend axially through a central bore of the LP compressor and project axially aft of the LP compressor.

In a further embodiment of any of the above, the LP shaft may extend into the AGB.

In a further embodiment of any of the above, the gear train may be disposed in the AGB and drivingly coupled to an aft end of the LP shaft.

In a further embodiment of any of the above, the gear train may be a dual gear train comprising first and second drive inputs to the LP compressor.

In a further embodiment of any of the above, the gear train may comprise first and second sets of gears. The LP shaft may be drivingly coupled to both said first and second sets of gears for driving the LP compressor.

In a further embodiment of any of the above, the LP shaft may be a one piece shaft having a power turbine shaft portion extending forwardly of the LP turbine and a LP compressor shaft portion extending rearwardly from the LP turbine to a location aft of the LP compressor.

In a further embodiment of any of the above, the LP shaft may extend centrally through the HP shaft. The LP shaft may be supported by at least one bearing mounted in an internal cavity disposed between the HP compressor and the LP compressor and radially inwardly of an annular gas path between the HP compressor and LP compressor.

In a further embodiment of any of the above, the HP shaft may comprise a first shaft section projecting aft of the HP compressor and a second shaft section projecting axially through the LP compressor into the AGB. A gear may be disposed in the internal cavity to drivingly connect the first shaft section to the second shaft section.

In a further embodiment of any of the above, the gear may be a bevel gear having a rotation axis perpendicular to the engine axis.

In a further embodiment of any of the above, the reverse flow gas turbine engine may comprise a split casing including first and second separable casing sections having an interface between the HP compressor and the LP compressor to provide access to an internal cavity disposed radially inwardly of an annular gaspath between the LP and HP compressors. The internal cavity may house at least one bearing supporting the LP shaft.

In a further embodiment of any of the above, the HP shaft may have a first shaft section projecting aft of the HP compressor and a second shaft section projecting axially through the LP compressor into the AGB. The first and second shaft sections may be drivingly connected by a bevel gear housed in the internal cavity. The at least one bearing may be disposed between said first and second shaft sections of the HP shaft.

In a further embodiment of any of the above, the AGB may have an input axis coaxial to the engine axis.

In a further embodiment of any of the above, the HP shaft may extend axially through a central bore of the LP compressor and project axially aft of the LP compressor in driving engagement with the AGB.

In another aspect, there is provided a multi-spool gas turbine engine as recited in claim 11.

In an embodiment of any of the above, the LP shaft may extend into the AGB axially beyond the HP shaft and the hollow compressor shaft portion of the LP compressor.

In a further embodiment of any of the above, the HP shaft may end axially between the hollow compressor shaft portion of the LP compressor and the LP shaft.

In a further embodiment of any of the above, the HP shaft may comprise first and second shaft sections drivingly coupled by a bevel gear disposed in a cavity between the HP compressor and the LP compressor radially inwardly of a gas path between the HP and LP compressors.

In a further embodiment of any of the above, at least one bearing may be provided in the cavity between the first and second shaft sections of the HP shaft, the at least one bearing supporting the LP shaft.

In a further embodiment of any of the above, the gear train may be a dual gear train comprising first and second sets of gears respectively disposed on opposed lateral sides of the LP shaft to provide first and second drive inputs to the LP compressor.

In a further embodiment of any of the above, the cavity may be defined by first and second casing sections having a mounting interface disposed between the HP compressor and the LP compressor. The first and second casing sections may be separable to provide access to said cavity.

In a further embodiment of any of the above, the engine may be an aircraft engine having a reverse flow configuration including an air inlet disposed aft of the LP compressor along a direction of travel of the aircraft engine. The AGB may be disposed aft of the air inlet.

### DESCRIPTION OF THE DRAWINGS

Reference is now made to the accompanying figures in which:
Fig. 1 is a schematic cross-sectional view of a multi-spool gas turbine engine;
Fig. 2 is an enlarged cross-section of the engine shown in Fig. 1 and illustrating a gear driven low pressure (LP) compressor and an axially mounted accessory gearbox (AGB) driven centrally through the LP compressor;
Fig. 3 is an enlarged cross-section view similar to Fig. 2 and illustrating a gear and shaft support arrangement in an internal cavity between the HP and the LP compressor;
Fig. 4 is an isometric view of a dual gear train between the LP shaft and the LP compressor;
Fig. 5 is an enlarged cross-section view similar to Fig. 3 but illustrating a segmented LP shaft with a spline connection between the HP compressor and the LP compressor;
Fig. 6 is a cross-section view illustrating an alternative in which the LP shaft is not supported between the HP compressor and the LP compressor and in which the HP shaft is not interrupted to accommodate a support for the LP shaft.

### DETAILED DESCRIPTION

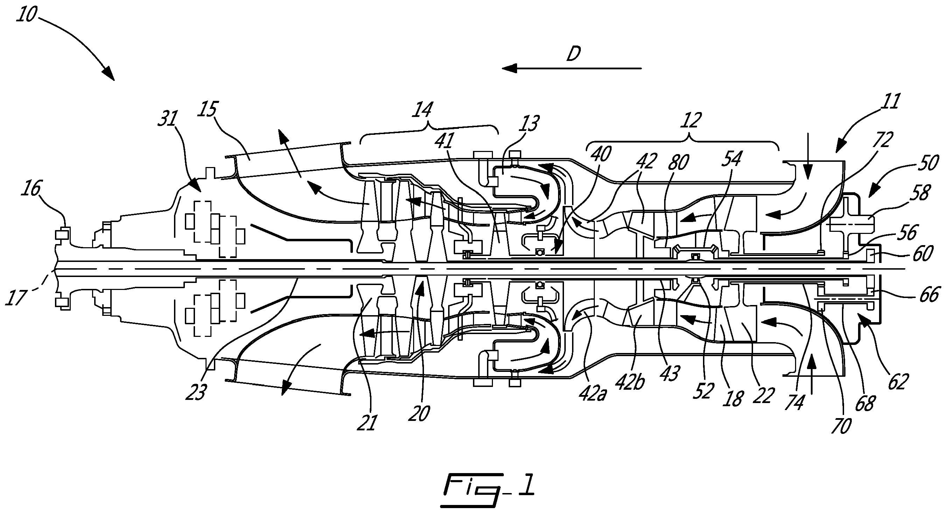

Fig. 1 illustrates a gas turbine engine 10 of a type preferably provided for use in subsonic flight, generally comprising in serial flow communication an air inlet 11, a compressor section 12 for pressurizing the air from the air inlet 11, a combustor 13 in which the compressed air is mixed with fuel and ignited for generating an annular stream of hot combustion gases, a turbine section 14 for extracting energy from the combustion gases, an exhaust outlet 15 through which the combustion gases exit the engine 10. The engine 10 further has a drive output shaft 16 having a front end configured to drive a rotatable load (not shown). The rotatable load can, for instance, take the form of a propeller or a rotor, such as a helicopter main rotor. Depending on the intended use, the engine 10 can be configured as a turboprop engine or a turboshaft engine. Fig. 1 illustrates a turboprop configuration. The gas turbine engine 10 has a centerline or longitudinal center axis 17 about which the compressor and turbine rotors rotate.

The gas turbine engine 10 has an axially extending central core which defines a gaspath 18 through which gases flow, as depicted by flow arrows in Fig. 1. The exemplary embodiment shown in Fig. 1 is a "reverse-flow" engine because gases flow through the gaspath 18 from the air inlet 11 at a rear portion thereof, to the exhaust outlet 15 at a front portion thereof. This is in contrast to "through-flow" gas turbine engines in which gases flow through the core of the engine from a front portion to a rear portion. The direction of the flow of gases through the gaspath 18 of the engine 10 disclosed herein can be better appreciated by considering that the gases flow through the gaspath 18 in the same direction D as the one along which an aircraft engine travels during flight. Stated differently, in the non-limitative example shown in Fig. 1, gases flow through the engine 10 from a rear end thereof towards the output shaft 16.

It will thus be appreciated that the expressions "forward" and "aft" used herein refer to the relative disposition of components of the engine 10, in correspondence to the "forward" and "aft" directions of the engine 10 and aircraft including the engine 10 as defined with respect to the direction of travel. In the embodiment shown, a component of the engine 10 that is "forward" of another component is arranged within the engine 10 such that it is located closer to output shaft 16 (e.g. closer to the propeller in a turboprop application). Similarly, a component of the engine 10 that is "aft" of another component is arranged within the engine 10 such that it is further away from the output shaft 16.

Still referring to Fig. 1, the engine 10 has multiple spools which perform compression to pressurize the air received through the air inlet 11, and which extract energy from the combustion gases before they exit the gaspath 18 via the exhaust outlet 15. More particularly, the illustrated embodiment comprises a low pressure (LP) spool 20 and a high pressure (HP) spool 40 mounted for rotation about the engine axis 17. The LP and HP spools 20, 40 are independently rotatable about the axis 17. The term "spool" is herein intended to broadly refer to drivingly connected turbine and compressor rotors and is, thus, not limited to a compressor and turbine assembly on a single shaft. As will be seen hereinbelow, it also includes a rotary assembly with multiple shafts geared together.

The LP spool 20 includes at least one component to compress the air that is part of the compressor section 12, and at least one component to extract energy from the combustion gases that is part of the turbine section 14. More particularly, the LP spool 20 has an LP turbine 21, also known as a power turbine, which may include different number of stages (three stages in the illustrated embodiment), and which drives an LP compressor 22 (also referred to as a boost). The LP turbine 21 drives the LP compressor 22, thereby causing the LP compressor 22 to pressurize incoming air from the air inlet 11. The LP compressor 22 is disposed just forward of the air inlet 11. Both the LP turbine 21 and the LP compressor 22 are disposed along the center axis 17. In the depicted embodiment, both the LP turbine 21 and the LP compressor 22 include rotatable components having an axis of rotation that is coaxial with the center axis 17. It is understood that they may include one or more stages depending upon the desired engine thermodynamic cycle.

The LP turbine 21 is forward of the LP compressor 22. The LP turbine 21 is also aft of the exhaust outlet 15. The LP compressor 22 is forward of the air inlet 11. This arrangement of the LP turbine 21 and the LP compressor 22 provides for a reverse-flow engine 10 that has one or more LP compressor stages located at the rear of the engine 10, and which are driven by one or more low pressure turbine stages located at the front of the engine 10.

The LP spool 20 further comprises an LP shaft 23 coaxial with engine axis 17. The LP turbine 21 is drivingly connected to the LP shaft 23. The LP shaft 23 allows the LP turbine 21 to drive the LP compressor 22 during operation of the engine 10. As will be discussed in greater details hereinbelow, the LP shaft 23 is drivingly coupled to the LP compressor 22 via a gear train, thereby allowing the LP compressor 22 to run at a different rotational speed from the LP turbine 21. This can provide more flexibility in the selection of design points for the LP compressor 22 while at the same time allowing to drivingly connect an axially mounted accessory gear box (AGB) to the HP spool 40 centrally through the LP compressor 22, thereby minimizing the engine envelope in a direction radial from the engine axis 17 as compared to conventional boosted engine with side-mounted AGBs driven via a tower shaft.

Still referring to Fig. 1, it can be appreciated that the LP shaft 23 extends axially forwardly from the LP turbine 21 for driving the output shaft 16. The LP shaft 23 is drivingly connected to the output shaft 16 via a suitable reduction gear box (RGB) 31. A rotatable load, a propeller (not shown) according to the illustrated example, is connectable to a front end of the output shaft 16. In this way, the LP turbine 21 can be used to drive the rotatable load (e.g. the propeller) at a reduced speed relative to the speed of the LP turbine 21. In such a configuration, during operation of the engine 10, the LP turbine 21 drives the rotatable load such that a rotational drive produced by the LP turbine 21 is transferred to the rotatable load via the LP shaft 23, the RGB 31 and the output shaft 16 coming out forwardly from the RGB 31. The rotatable load can therefore be any suitable component, or any combination of suitable components, that is capable of receiving the rotational drive from the LP turbine section 21.

The RGB 31 processes and outputs the rotational drive transferred thereto from the LP turbine 21 via the LP shaft 23 through known gear reduction techniques. The RGB 31 allows for the load (e.g. the propeller according to the illustrated turboprop example) to be driven at its optimal rotational speed, which is different from the rotational speed of the LP turbine 21. The RGB 31 is axially mounted at the front end of the engine 10. The RGB 31 has an input and an output axis parallel (coaxial in the illustrated embodiment) to the central axis 17 of the engine 10.

In an alternate embodiment where the engine 10 is a turboshaft, the rotational load (which may include, but is not limited to, helicopter main rotor(s) and/or tail rotor(s), propeller(s) for a tilt-rotor aircraft, pump(s), generator(s), gas compressor(s), marine propeller(s), etc.) is driven by the LP turbine 21 via the RGB 31, or the RGB 31 may be omitted such that the output of the engine 10 is provided directly by the LP shaft 23.

The LP shaft 23 with the portions thereof extending forward and aft of the LP turbine 21 provides the engine 10 with bidirectional drive. Modularity criteria for gas turbine engines may motivate the use of distinct shaft sections in opposed axial directions from the LP turbine 21. The LP shaft sections may be directly or indirectly connected together. Alternately, as shown in Fig. 1, the LP shaft 23 can be integral with a first portion of the LP shaft extending axially rearwardly from the LP turbine 21, and a second portion (a power turbine segment) extending between the RGB 31 and the LP turbine 21 forwardly from the LP turbine 21. Whether the LP shaft 23 is integral or segmented, the LP turbine 21 provides rotational drive outputted at each end of the LP shaft 23.

According to the non-limiting embodiment illustrated in Fig. 1, the LP shaft 23 is a one piece shaft and extends axially through a central bore of the LP compressor 22 to a location aft of the LP compressor 22 for connection with an axially mounted boost gear train disposed on an aft facing side of the LP compressor 22, as will discussed in further details hereinbelow. The use of such a one piece LP shaft 23 may allow the shaft to be introduced in the engine at the end of the assembly process in a single operation, thereby simplifying the assembly procedure.

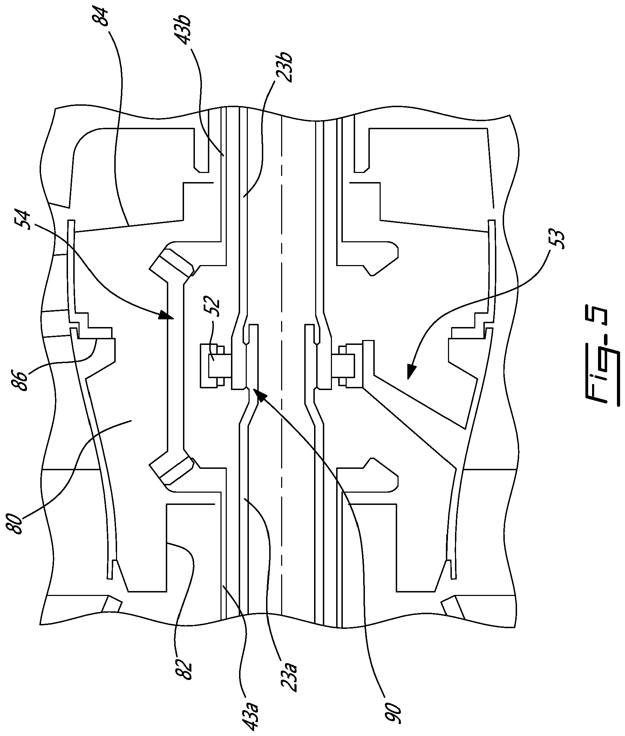

However, it is understood that the LP shaft 23 is not limited to the configuration depicted in Fig. 1. As mentioned above, instead of being provided in the form of a one piece through shaft, it could be divided into serially interconnectable sections. As exemplified in Fig. 5, splines 90 or other suitable connections could be provided between adjacent LP shaft sections 23a, 23b to transfer torque from the LP turbine 21.

In light of the preceding, it can be appreciated that the LP turbine 21 drives both the rotatable load and the LP compressor 22. Furthermore, the rotatable load, when mounted to the engine 10, and the LP compressor 22 are disposed on opposite ends of the LP turbine 21. It can thus be appreciated that one or more low pressure turbine stages are used to drive elements in front of the LP turbine (e.g. propeller, RGB 31, etc.) as well as to drive elements to the rear of the LP turbine (e.g. LP compressor 22). This configuration of the LP turbine 21 allows it to simultaneously drive the rotatable load and the LP compressor 22.

Still referring to Fig. 1, the HP spool 40 has at least one component to compress the air that is part of the compressor section 12, and at least one component to extract energy from the combustion gases that is part of the turbine section 14. The HP spool 40 is also disposed along the center axis 17 and includes a HP turbine 41 (also referred to as the compressor turbine) drivingly engaged (e.g. directly connected) to an HP compressor 42 by an HP shaft 43 rotating independently of the LP shaft 23. In the illustrated embodiment, the HP shaft 43 is a hollow shaft which rotates around the LP shaft 23. That is the LP shaft 23 extends axially through the HP shaft 43. The HP turbine 41 and the HP compressor 42 may include one or more stages of rotors, depending upon the desired engine thermodynamic cycle, for example. In the depicted embodiment, the HP compressor 42 includes a centrifugal compressor 42a or impeller and an axial compressor 42b, both of which are driven by the HP turbine 41. During operation of the engine 10, torque is transferred from HP turbine 41 to the HP compressor 42 via HP shaft 43.

In the exemplified reverse flow engine configuration, the HP turbine 41 is aft of the LP turbine 21, and forward of the combustor 13. The HP compressor 42 is aft of the combustor 13, and forward of the LP compressor 22. From this arrangement of the HP turbine 41 and the HP compressor 42, it can be appreciated that during operation of the engine 10, the LP compressor 22 driven by the LP turbine 21 feeds pressurized air to the HP compressor 42. Therefore, the pressurized air flow produced by the LP compressor 22 is provided to the HP compressor 42 and contributes to the work of both the LP turbine 21 and the HP turbine 41. This arrangement provides for a boosted reverse flow engine.

It can thus be appreciated that the presence of the above-described LP and HP spools 20, 40 provides the engine 10 with a "split compressor" arrangement. More particularly, some of the work required to compress the incoming air is transferred from the HP compressor 42 to the LP compressor 22. In other words, some of the compression work is transferred from the HP turbine 41 to the more efficient LP turbine 21. This transfer of work may contribute to higher pressure ratios while maintaining a relatively small number of rotors. In a particular embodiment, higher pressure ratios allow for higher power density, better engine specific fuel consumption (SFC), and a lower turbine inlet temperature (sometimes referred to as "T4") for a given power. These factors can contribute to a lower overall weight for the engine 10. The transfer of compression work from the HP compressor 42 to the LP compressor 22 contrasts with some conventional reverse-flow engines, in which the high pressure compressor (and thus the high pressure turbine) perform all of the compression work.

In light of the preceding, it can be appreciated that the LP turbine 21 is the "low-speed" and "low pressure" turbine section when compared to the HP turbine 41. The LP turbine 21 is sometimes referred to as the "power turbine". The turbine rotors of the HP turbine 41 spin at a higher rotational speed than the turbine rotors of the LP turbine 21 given the closer proximity of the HP turbine 41 to the outlet of the combustor 13. Consequently, the compressor rotors of the HP compressor 42 may rotate at a higher rotational speed than the compressor rotors of the LP compressor 22.

The HP turbine 41 and the HP compressor 42 can have any suitable mechanical arrangement to achieve the above-described split compressor functionality. For example, and as shown in Fig. 1, the HP shaft 43 extends concentrically about the LP shaft 23 and is independently rotatable relative thereto. The relative rotation between the HP shaft 43 and the LP shaft 23 allow the shafts 23, 43 to rotate at different rotational speeds, thereby allowing the HP compressor 42 and the LP compressor 22 to rotate at different rotational speeds. The HP shaft 43 can be mechanically supported by the LP shaft 23 using bearings or the like.

Still referring to the embodiment shown in Fig. 1, the engine 10 also includes an accessory gearbox (AGB) 50. The AGB 50 receives a rotational input from the HP spool 40 and, in turn, drives accessories (e.g. fuel pump, starter-generator, oil pump, scavenge pump, etc.) that contribute to the functionality of the engine 10. The AGB 50 can be designed with side-facing accessories, top-facing accessories, or rear-facing accessories depending on the installation needs.

According to the illustrated embodiment, the AGB 50 is concentrically mounted axially aft of the LP compressor 22 as an axial extension of the engine envelope. The axial positioning of the AGB 50 allows minimizing the overall radial envelope of the engine as compared to a split compressor or boosted engine having the AGB mounted on a side of the engine and connected to the HP spool via a tower shaft. In the illustrated embodiment, the AGB 50 is accommodated within the envelope of the engine in a plane normal to the central axis 17.

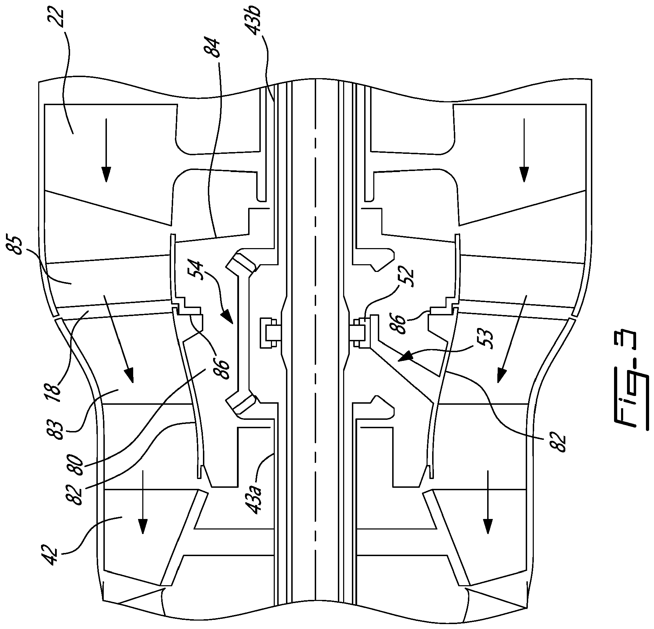

In the illustrated embodiment, the AGB input drive axis is coaxial to the LP compressor centerline and, thus, the engine axis 17. By so aligning the input axis of the AGB 50 relative to the LP compressor centerline, the drive input to the AGB 50 can be provided centrally through the LP compressor 22, thereby eliminating the need for a tower shaft and an externally mounted gear arrangement. However, unlike conventional reverse flow engines (like the well-known PT6 engine manufactured by Pratt & Whitney Canada), which do not include a compressor boost, the presence of the LP compressor 22 axially between the HP compressor 42 and the AGB 50 physically interferes with the connection of the AGB 50 with the HP spool 40, which is disposed on the opposed axially facing side of the LP compressor 22. This particular problem is overcome by extending the HP shaft 43 through a central bore or passage in the LP compressor 22. The HP shaft 43 thus provides a drive input to the AGB 50 coaxial to the engine axis 17. According to the embodiment illustrated in Figs. 1-3, the HP shaft 43 is segmented between the HP compressor 42 and the LP compressor 22 to allow for the introduction of a bearing 52 mounted to a support 53 to provide support to the LP shaft 23 between the HP compressor 42 and the LP compressor 22. As best shown in Fig, 3, a gear 54 is provided to drivingly couple the HP compressor shaft segment 43a of the HP shaft 43 to an AGB drive input shaft segment 43b, which may also be viewed as being an extension of the HP shaft 43. The gear 54 may be provided in the form of a bevel gear having a 1:1 speed ratio. As shown in Fig. 3, the bevel gear may be set to have a rotation axis perpendicular to the rotation axis of the HP shaft segments 43a, 43b. Such a gear arrangement allows for the installation of a support and bearing structure for supporting the LP shaft 23. Such a support may be suitable when the LP shaft 23 is provided in the form of a one-piece shaft or in order to address specific shaft dynamic requirements.

The AGB drive input shaft segment 43b projects axially into the AGB 50 and is provided at a distal end thereof with a gear 56, which is in meshing engagement with an associated AGB output gear 58. In the illustrated example, the AGB output gear 58 has a rotation axis parallel to the engine axis 17. The output gear 58 is drivingly connected to accessories (not shown). It is understood that the accessories gear train in the AGB 50 can adopt various configurations, including multiple outputs and different gear ratios.

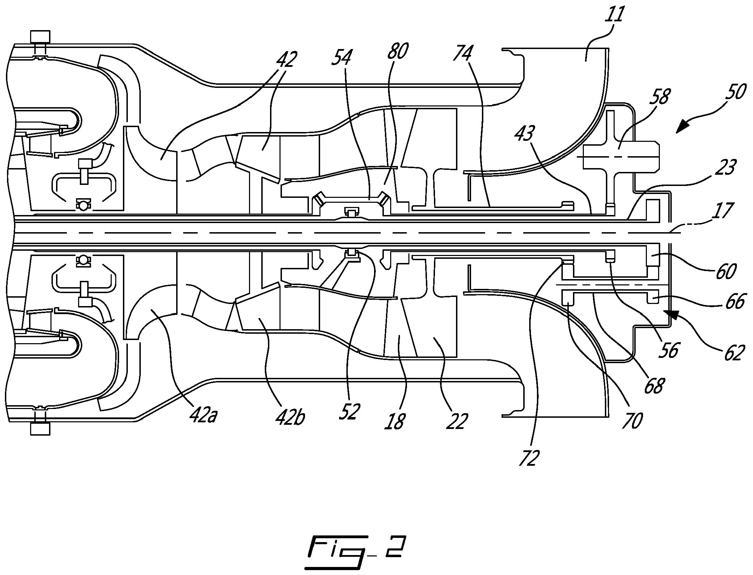

Referring to Figs. 1 and 2, it can be appreciated that a boost gear train 62 is integrated to the AGB 50 to drivingly couple the LP shaft 23 and, thus, the LP turbine 21 to the LP compressor 22. As mentioned herein above, the gear connection between the LP turbine 21 and the LP compressor 22 is advantageous in that it allows driving the LP compressor 22 at a different speed than the LP turbine 21. It can thus allow for overall thermodynamic cycle performance improvement.

The LP shaft 23 projects all the way to the aft end of the engine into the AGB 50 axially beyond the HP shaft 43 for connection with the gear train 62. The gear train 62 comprises an input gear 60 provided at the distal end portion of the LP shaft 23, the end portion which projects outwardly of the HP shaft 43. The input gear 60 is in meshing engagement with a second gear 66 mounted at an aft end of a transfer shaft 68 having a rotation axis parallel to the engine axis 17. A third gear 70 is provided at an opposed forward end of the transfer shaft 68 for meshing engagement with a fourth gear 72 provided at the distal end of a LP compressor shaft 74 projecting axially from an aft facing surface of the LP compressor 22. As shown in Figs. 1 and 2, the LP compressor shaft 74 is a hollow shaft extending concentrically about the HP shaft 43. The LP compressor shaft 74 ends at a location forward of the HP shaft 43, to thereby allow the HP shaft 43 to be drivingly connected to gear 58. It can be appreciated that the relative lengths of the shafts 23, 43, 74 projecting into the AGB 50 allows for the various gear connections (the innermost shaft having the deepest AGB penetration).

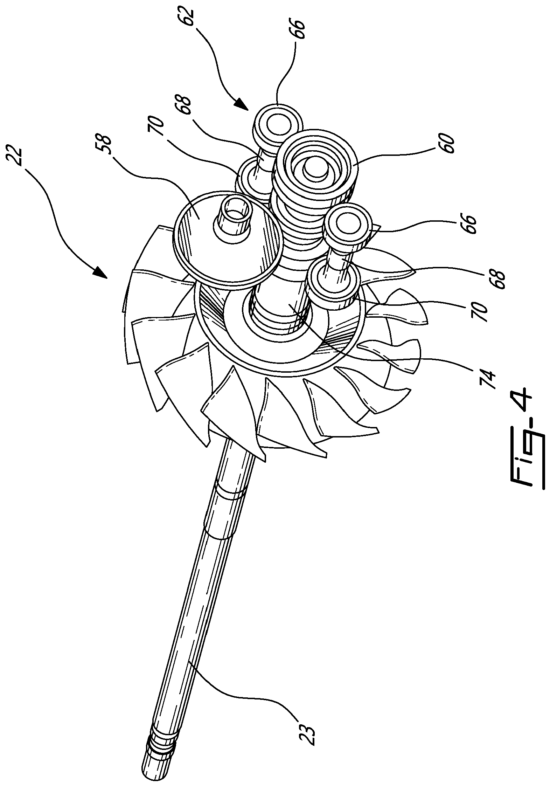

The boost gear train 62 can adopt various configurations and is, thus, not limited to the single gear train architecture shown in Figs. 1 and 2. For instance, as shown in Fig. 4, the gear train 62 could be provided as a dual gear train to provide first and second drive inputs to the LP compressor 22. The dual gear train 62 could comprise first and second sets of gears provided on opposed lateral sides of the LP shaft 23 and drivingly connected to the same input gear 60. The gears may be identical to the gears described above with respect to Figs. 1 and 2.

As mentioned herein above, the gear connection between the LP turbine 21 and the LP compressor 22 also allows driving the LP compressor at a different speed than the LP turbine. It can thus allow for overall thermodynamic cycle performance improvement. The positioning of the gear train 62 at the aft end of the engine in a common housing with the AGB 50 contributes to facilitate the engine assembly and eliminate the need for a separate casing and lubricating structure for the boost gear train 62. One containment and lubricating system can be used for both the AGB gears 56, 58 and the boost gear train 62. Such an integration of the AGB and the boost gear train in a common housing facilitate the access to the gears for adjustment purposes while minimizing part counts. However, it is understood that the boost gear train 62 could be provided as a separate unit on the AGB facing side of the LP compressor 22 and, thus, axially aft of the LP compressor 22 in a reverse flow engine configuration. The fact the boost gear train 62 has a drive input coaxial to the engine axis 17 also provides for a compact geared engine arrangement while at the same time contributing to ease the assembly process.

In the embodiment illustrated in Fig. 1, the case of the air inlet forms part of the AGB 50 and boost gear train 62 housing. However, it is understood that the AGB and the boost gear train 62 could be packaged as a stand-alone unit.

As can be appreciated from Fig. 3, the gear 54 and the bearing 52 are housed in an internal cavity 80 radially inwardly of the gaspath 18 between the HP compressor 42 and the LP compressor 22. The internal cavity 80 is bounded by the compressor inner gaspath wall 82. The internal cavity 80 communicates with the AGB 50 via the central bore extending axially through the LP compressor 22, thereby providing for a combined bearing/gear train oil chamber. Access to the gear 54 and bearing 52 may be provided by a split casing assembly including first and second separable casing sections 82, 84 having an interface 86 axially between the HP compressor 42 and the LP compressor 22. The casing assembly may form part of a split inlet guide vane structural case architecture. For instance, the first casing section 82 could be a cast stator including a circumferential row of guide vanes 83 and the second casing section 84 could be another cast stator including another circumferential of guide vanes 85. The guide vanes 85 and 83 cooperate to direct the flow of air from the LP compressor 22 to the HP compressor 42. The adjacent guide vanes 83, 85 are, thus, part of two separate castings. The interface 86 may be provided in the form of axially facing flanges depending radially inwardly from the inner endwall of the separate vane castings. Any suitable fasteners may be used to releasably retain the casing sections together.

As shown in Fig. 5, the internal cavity 80 could also house a connecting structure (e.g. the spline 90) for drivingly connecting a first LP shaft section 23a to a second LP shaft section 23b axially between the HP compressor 42 and the LP compressor 22. This would facilitate access to different support and coupling structures all at once. Furthermore, as shown in Fig. 5, the bearing 52 may be provided at the spline connection 90.

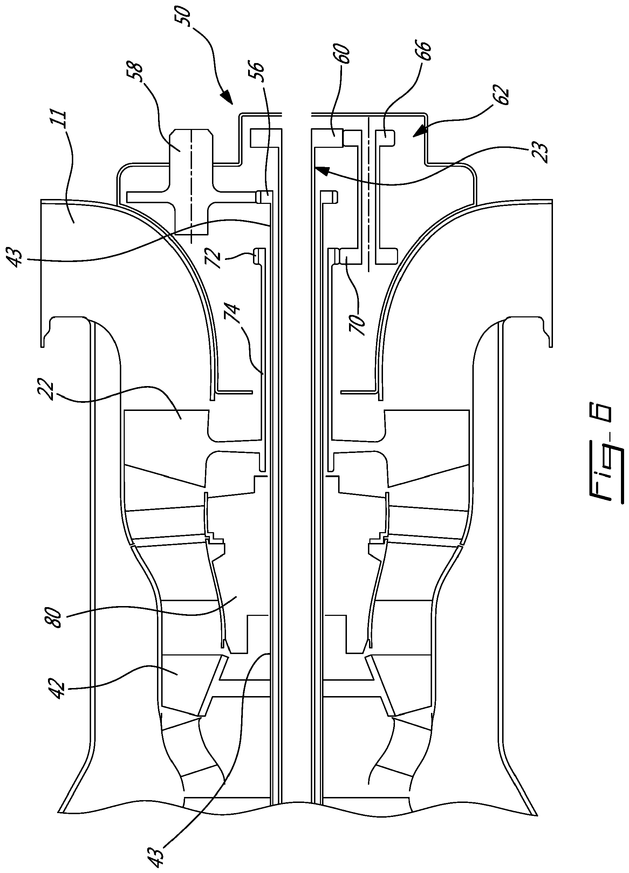

According to another aspect shown in Fig. 6, no support structure could be provided in the internal cavity 80 for supporting the LP shaft 23. As such no discontinuity in the HP shaft 43 is required to accommodate a LP shaft support and, thus, the HP shaft 43 could extend continuously from the HP compressor 42 to the AGB 50 and the gear 54 could be omitted.

It can thus be appreciated that at least some of the embodiments of the engine 10 disclosed herein provide a mechanical architecture of turbomachinery that allows for a split compressor system in a compact PT6 type configuration. Such a split compressor engine in a reverse flow or through flow configuration may be used for aircraft nose installations, as well as for wing installations. The boost gear train 62 eliminates the need for a tower shaft for connecting the AGB 50 to the HP spool 40. Indeed, with this engine architecture, the HP shaft can be axially directly connected to the AGB, the AGB having an input axis coaxial to the engine axis 17. In this way no shaft has to be passed across the gaspath to drivingly connect the HP spool 40 to the AGB 50, thereby avoiding performances losses. The compressor aerodynamics can be improved by eliminating the service strut typically used to pass the tower shaft. The engine weight may be reduced by eliminating the need of an upstream transfer case. The position of the hardware used to build the gear trains may be designed for an optimal clearance from the LP rotor center. It can also be appreciated that at least some embodiments allow to locate the AGB along the engine centerline aft of the LP compressor. This may provide installation benefits, reduce cost and weight relative to an externally mounted tower shaft driven AGB.

The above description is meant to be exemplary only, and one skilled in the art will recognize that changes may be made to the embodiments described without departing from the scope of the invention disclosed.

## Claims

1. A reverse flow gas turbine engine (10) comprising:
a low pressure (LP) spool (20) and a high pressure (HP) spool (40) rotatable independently of one another about an engine axis (17), the LP spool (20) comprising an LP turbine (21), an LP compressor (22) and an LP shaft (23) drivingly connected to the LP turbine (21), the LP turbine (21) disposed forward of the LP compressor (22) relative to a direction of travel (D) of the engine (10), the HP spool (40) comprising an HP turbine (41), an HP compressor (42) and an HP shaft (43) extending axially through a central bore of the LP compressor (22) and drivingly connecting the HP turbine (41) to the HP compressor (42), the HP compressor (42) disposed forward relative to the direction of travel (D) of the engine of the LP compressor (22) and in fluid communication therewith, the HP turbine (41) disposed aft of the LP turbine (21) relative to the direction of travel (D) of the engine and in fluid communication therewith, and **characterized in that** the reverse flow gas turbine engine (10) further comprises:
an accessory gear box (AGB) (50) drivingly connected to the HP spool (40), the LP compressor (22) disposed axially between the HP compressor (42) and the AGB (50); and
a gear train (62) drivingly coupling the LP shaft (23) to the LP compressor (22), the gear train (62) disposed aft relative to the direction of travel (D) of the engine of the LP compressor (22).

2. The reverse flow gas turbine engine (10) defined in claim 1, wherein the gear train (62) coupling the LP shaft (23) to the LP compressor (22) and the AGB (50) share a common housing.

3. The reverse flow gas turbine engine (10) defined in claim 2, wherein the AGB (50) has an input axis coaxial to the engine axis (17).

4. The reserve flow gas turbine engine (10) defined in any preceding claim, wherein the LP shaft (23) extends axially through the central bore of the LP compressor (22) and projects axially aft of the LP compressor (22) into the AGB (50), and the gear train (62) is disposed in the AGB (50) and is drivingly coupled to an aft end of the LP shaft (23).

5. The reverse flow gas turbine engine (10) defined in any preceding claim, wherein the gear train (62) is a dual gear train comprising first and second drive inputs to the LP compressor (22).

6. The reverse flow gas turbine engine (10) defined in any preceding claim, wherein the LP shaft (23) has a power turbine shaft portion extending forwardly relative to the direction of travel (D) of the engine of the LP turbine (21) and a LP compressor shaft portion extending rearwardly relative to the direction of travel (D) of the engine from the LP turbine (21) to a location aft of the LP compressor (22).

7. The reverse flow gas turbine engine (10) defined in claim 6, wherein the LP shaft (23) extends centrally through the HP shaft (43), and the LP shaft (23) is supported by at least one bearing (52) mounted in an internal cavity (80) disposed between the HP compressor (42) and the LP compressor (22) and radially inwardly of an annular gas path (18) between the HP compressor (42) and LP compressor (22).

8. The reverse flow gas turbine engine (10) defined in claim 7, wherein the HP shaft (43) comprises a first shaft section (43a) projecting aft of the HP compressor (42) and a second shaft section (43b) projecting axially through the LP compressor (22) into the AGB (50), and a gear (54) is disposed in the internal cavity (80) to drivingly connect the first shaft section (43a) to the second shaft section (43b).

9. The reverse flow gas turbine engine (10) defined in claim 8, wherein the gear (54) is a bevel gear (54) having a rotation axis perpendicular to the engine axis (17).

10. The reverse flow gas turbine engine (10) defined in any preceding claim, comprising a split casing including first and second separable casing sections (82, 84) having an interface (86) between the HP compressor (42) and the LP compressor (22) to provide access to an internal cavity (80) disposed radially inwardly of an annular gaspath (18) between the LP and HP compressors (22;42), the internal cavity (80) housing at least one bearing (52) supporting the LP shaft (23).

11. A multi-spool gas turbine engine (10) comprising:
a low pressure (LP) spool (20); a high pressure (HP) spool (40), the LP spool (20) and the HP spool (40) rotatable independently of one another about a central axis (17), the LP spool (20) comprising an LP compressor (22) and an LP turbine (21), the HP spool (40) comprising an HP turbine (41) and an HP compressor (42); and
an accessory gear box (AGB) (50) drivingly connected to the HP spool (40);
wherein the LP spool (20) comprises an LP shaft (23);
and wherein the HP spool (40) comprises an HP shaft (43) drivingly connected to the HP turbine (41), the HP shaft (43) being drivingly connected to the AGB (50); **characterised in that**
the LP compressor (22) is disposed axially between the HP compressor (42) and the AGB (50); and the engine further comprises a gear train (62) drivingly coupling the LP compressor (22) to the LP turbine (21), the gear train (62) disposed on an AGB facing side of the LP compressor (22); wherein the LP shaft (23) extends axially from the LP turbine (21) through a central bore of the LP compressor (22) and is in driving engagement with the gear train (62);
wherein the LP compressor (22) has a hollow compressor shaft portion (74) extending concentrically about the LP shaft (23) on the AGB facing side of the LP compressor (22), the hollow compressor shaft portion (74) being drivingly connected to the LP shaft (23) by the gear train (62); and wherein the HP shaft (43) extends axially though the central bore of the LP compressor (22) between the LP shaft (23) and the hollow compressor shaft portion (74) of the LP compressor (22).

12. The multi-spool gas turbine engine (10) defined in claim 11, wherein the LP shaft (23) extends into the AGB (50) axially beyond the HP shaft (43) and the hollow compressor shaft portion (74) of the LP compressor (22), and the HP shaft (43) ends axially between the hollow compressor shaft portion (74) of the LP compressor (22) and the LP shaft (23).

13. The multi-spool gas turbine engine (10) defined in claim 11 or 12, wherein the HP shaft (43) comprises first and second shaft sections (43a,b) drivingly coupled by a bevel gear (54) disposed in a cavity (80) between the HP compressor (42) and the LP compressor (22) radially inwardly of a gas path (18) between the HP and LP compressors (42,22).

14. The multi-spool gas turbine engine (10) defined in any of claims 11 to 13, wherein the engine (10) is an aircraft engine (10) having a reverse flow configuration including an air inlet (11) disposed aft of the LP compressor (22) along a direction of travel of the aircraft engine (10), and the AGB (50) is disposed aft of the air inlet (11).

## Patentansprüche

1. Rückstrom-Gasturbinentriebwerk (10), umfassend:
eine Niederdruck(LP)-Welle (20) und eine Hochdruck(HP)-Welle (40), die unabhängig voneinander um eine Triebwerksachse (17) rotierbar sind, wobei die LP-Welle (20) eine LP-Turbine (21), einen LP-Verdichter (22) und einen LP-Schaft (23), der antriebsmäßig mit der LP-Turbine (21) verbunden ist, umfasst, wobei die LP-Turbine (21) vor dem LP-Verdichter (22) relativ zu einer Bewegungsrichtung (D) des Triebwerks (10) angeordnet ist, wobei die HP-Welle (40) eine HP-Turbine (41), einen HP-Verdichter (42) und einen HP-Schaft (43) umfasst, der sich axial durch eine zentrale Bohrung des LP-Verdichters (22) erstreckt und die HP-Turbine (41) antriebsmäßig mit dem HP-Verdichter (42) verbindet, wobei der HP-Verdichter (42) relativ zur Bewegungsrichtung (D) des Triebwerks des LP-Verdichters (22) vorn angeordnet ist und in Fluidverbindung damit steht, wobei die HP-Turbine (41) hinter der LP-Turbine (21) relativ zur Bewegungsrichtung (D) des Triebwerks angeordnet ist und in Fluidverbindung damit steht, und **dadurch gekennzeichnet, dass** das Rückstrom-Gasturbinentriebwerk (10) ferner Folgendes umfasst:
ein Hilfsaggregatgetriebe (AGB) (50), das antriebsmäßig mit der HP-Welle (40) verbunden ist, wobei der LP-Verdichter (22) axial zwischen dem HP-Verdichter (42) und dem AGB (50) angeordnet ist; und
ein Zahnradgetriebe (62), das den LP-Schaft (23) antriebsmäßig mit dem LP-Verdichter (22) koppelt, wobei das Zahnradgetriebe (62) relativ zur Bewegungsrichtung (D) des Triebwerks des LP-Verdichters (22) hinten angeordnet ist.

2. Rückstrom-Gasturbinentriebwerk (10) nach Anspruch 1, wobei das Zahnradgetriebe (62), das den LP-Schaft (23) an den LP-Verdichter (22) koppelt, und das AGB (50) ein gemeinsames Gehäuse teilen.

3. Rückstrom-Gasturbinentriebwerk (10) nach Anspruch 2, wobei das AGB (50) eine Eingangsachse koaxial zur Triebwerksachse (17) aufweist.

4. Rückstrom-Gasturbinentriebwerk (10) nach einem der vorhergehenden Ansprüche, wobei sich der LP-Schaft (23) axial durch die zentrale Bohrung des LP-Verdichters (22) erstreckt und axial hinter dem LP-Verdichter (22) in das AGB (50) ragt, und das Zahnradgetriebe (62) in dem AGB (50) angeordnet ist und antriebsmäßig an ein hinteres Ende des LP-Schafts (23) gekoppelt ist.

5. Rückstrom-Gasturbinentriebwerk (10) nach einem der vorhergehenden Ansprüche, wobei das Zahnradgetriebe (62) ein doppeltes Zahnradgetriebe ist, das einen ersten und einen zweiten Antriebseingang zum LP-Verdichter (22) umfasst.

6. Rückstrom-Gasturbinentriebwerk (10) nach einem der vorhergehenden Ansprüche, wobei der LP-Schaft (23) einen Arbeitsturbinenschaftabschnitt, der sich relativ zur Bewegungsrichtung (D) des Triebwerks der LP-Turbine (21) nach vorn erstreckt, und einen LP-Verdichterschaftabschnitt, der sich relativ zur Bewegungsrichtung (D) des Triebwerks von der LP-Turbine (21) zu einer Stelle hinter dem LP-Verdichter (22) nach hinten erstreckt, aufweist.

7. Rückstrom-Gasturbinentriebwerk (10) nach Anspruch 6, wobei sich der LP-Schaft (23) zentral durch den HP-Schaft (43) erstreckt und der LP-Schaft (23) von mindestens einem Lager (52) getragen wird, das in einem inneren Hohlraum (80) montiert ist, der zwischen dem HP-Verdichter (42) und dem LP-Verdichter (22) und radial nach innen von einem ringförmigen Gaspfad (18) zwischen dem HP-Verdichter (42) und dem LP-Verdichter (22) angeordnet ist.

8. Rückstrom-Gasturbinentriebwerk (10) nach Anspruch 7, wobei der HP-Schaft (43) einen ersten Schaftbereich (43a), der hinter den HP-Verdichter (42) ragt, und einen zweiten Schaftbereich (43b), der axial durch den LP-Verdichter (22) in das AGB (50) ragt, umfasst und wobei ein Zahnrad (54) in dem inneren Hohlraum (80) angeordnet ist, um den ersten Schaftbereich (43a) antriebsmäßig mit dem zweiten Schaftbereich (43b) zu verbinden.

9. Rückstrom-Gasturbinentriebwerk (10) nach Anspruch 8, wobei das Zahnrad (54) ein Kegelrad (54) ist, welches eine Rotationsachse senkrecht zur Triebwerksachse (17) aufweist.

10. Rückstrom-Gasturbinentriebwerk (10) nach einem der vorhergehenden Ansprüche, umfassend eine geteilte Ummantelung, die einen ersten und einen zweiten trennbaren Ummantelungsbereich (82, 84) beinhaltet, aufweisend eine Schnittstelle (86) zwischen dem HP-Verdichter (42) und dem LP-Verdichter (22), um einen Zugang zu einem inneren Hohlraum (80) bereitzustellen, der radial nach innen von einem ringförmigen Gaspfad (18) zwischen dem LP- und dem HP-Verdichter (22, 42) angeordnet ist, wobei der innere Hohlraum (80) mindestens ein Lager (52) aufnimmt, welches den LP-Schaft (23) trägt.

11. Mehrwelliges Gasturbinentriebwerk (10), umfassend:
eine Niederdruck(LP)-Welle (20); eine Hochdruck(HP)-Welle (40), wobei die LP-Welle (20) und die HP-Welle (40) unabhängig voneinander um eine zentrale Achse (17) rotiert werden können, wobei die LP-Welle (20) einen LP-Verdichter (22) und eine LP-Turbine (21) umfasst, wobei die HP-Welle (40) eine HP-Turbine (41) und einen HP-Verdichter (42) umfasst; und
ein Hilfsaggregatgetriebe (AGB) (50), das antriebsmäßig mit der HP-Welle (40) verbunden ist; wobei die LP-Welle (20) einen LP-Schaft (23) umfasst;
und wobei die HP-Welle (40) einen HP-Schaft (43) umfasst, der antriebsmäßig mit der HP-Turbine (41) verbunden ist, wobei der HP-Schaft (43) antriebsmäßig mit dem AGB (50) verbunden ist;
**dadurch gekennzeichnet, dass**
der LP-Verdichter (22) axial zwischen dem HP-Verdichter (42) und dem AGB (50) angeordnet ist; und das Triebwerk ferner ein Zahnradgetriebe (62) umfasst, welches den LP-Verdichter (22) antriebsmäßig mit der LP-Turbine (21) koppelt, wobei das Zahnradgetriebe (62) an einer dem AGB zugewandten Seite des LP-Verdichters (22) angeordnet ist; wobei sich der LP-Schaft (23) axial von der LP-Turbine (21) durch eine zentrale Bohrung des LP-Verdichters (22) erstreckt und in Antriebseingriff mit dem Zahnradgetriebe (62) steht;
wobei der LP-Verdichter (22) einen hohlen Verdichterschaftabschnitt (74) aufweist, der sich konzentrisch um den LP-Schaft (23) an der dem AGB zugewandten Seite des LP-Verdichters (22) erstreckt, wobei der hohle Verdichterschaftabschnitt (74) durch das Zahnradgetriebe (62) antriebsmäßig mit dem LP-Schaft (23) verbunden ist; und wobei sich der HP-Schaft (43) axial durch die zentrale Bohrung des LP-Verdichters (22) zwischen dem LP-Schaft (23) und dem hohlen Verdichterschaftabschnitt (74) des LP-Verdichters (22) erstreckt.

12. Mehrwelliges Gasturbinentriebwerk (10) nach Anspruch 11, wobei sich der LP-Schaft (23) in das AGB (50) axial über den HP-Schaft (43) und den hohlen Verdichterschaftabschnitt (74) des LP-Verdichters (22) hinaus erstreckt und der HP-Schaft (43) axial zwischen dem hohlen Verdichterschaftabschnitt (74) des LP-Verdichters (22) und dem LP-Schaft (23) endet.

13. Mehrwelliges Gasturbinentriebwerk (10) nach Anspruch 11 oder 12, wobei der HP-Schaft (43) einen ersten und einen zweiten Schaftbereich (43a,b) umfasst, die durch ein Kegelrad (54), das in einem Hohlraum (80) zwischen dem HP-Verdichter (42) und dem LP-Verdichter (22) radial nach innen von einem Gaspfad (18) zwischen dem HP- und dem LP-Verdichter (42, 22) angeordnet ist, antriebsmäßig gekoppelt sind.

14. Mehrwelliges Gasturbinentriebwerk (10) nach einem der Ansprüche 11 bis 13, wobei das Triebwerk (10) ein Flugzeugtriebwerk (10) ist, das eine Rückstromkonfiguration aufweist, die einen Lufteinlass (11) beinhaltet, der hinter dem LP-Verdichter (22) entlang einer Bewegungsrichtung des Flugzeugtriebwerks (10) angeordnet ist, und wobei das AGB (50) hinter dem Lufteinlass (11) angeordnet ist.

## Revendications

1. Moteur à turbine à gaz à flux inversé (10) comprenant :
un corps (20) basse pression (LP) et un corps (40) haute pression (HP) pouvant tourner indépendamment l'un de l'autre autour d'un axe de moteur (17), le corps LP (20) comprenant une turbine LP (21), un compresseur LP (22) et un arbre LP (23) raccordés en entraînement à la turbine LP (21), la turbine LP (21) étant disposée à l'avant du compresseur LP (22) par rapport au sens de déplacement (D) du moteur (10), le corps HP (40) comprenant une turbine HP (41), un compresseur HP (42) et un arbre HP (43) s'étendant axialement à travers un alésage central du compresseur LP (22) et raccordant en entraînement la turbine HP (41) au compresseur HP (42), le compresseur HP (42) étant disposé à l'avant par rapport au sens de déplacement (D) du moteur du compresseur LP (22) et en communication fluidique avec celui-ci, la turbine HP (41) étant disposée à l'arrière de la turbine LP (21) par rapport au sens de déplacement (D) du moteur et en communication fluidique avec celui-ci, et **caractérisé en ce que** le moteur à turbine à gaz à flux inversé (10) comprend en outre :
une boîte d'entraînement des accessoires (AGB) (50) raccordée en entraînement au corps HP (40), le compresseur LP (22) étant disposé axialement entre le compresseur HP (42) et l'AGB (50) ; et
un train d'engrenages (62) couplant en entraînement l'arbre LP (23) au compresseur LP (22), le train d'engrenages (62) étant disposé à l'arrière par rapport au sens de déplacement (D) du moteur du compresseur LP (22).

2. Moteur à turbine à gaz à flux inversé (10) selon la revendication 1, dans lequel le train d'engrenages (62) couplant l'arbre LP (23) au compresseur LP (22) et l'AGB (50) partagent un logement commun.

3. Moteur à turbine à gaz à flux inversé (10) selon la revendication 2, dans lequel l'AGB (50) a un axe d'entrée coaxial avec l'axe de moteur (17).

4. Moteur à turbine à gaz à flux inversé (10) selon une quelconque revendication précédente, dans lequel l'arbre LP (23) s'étend axialement à travers l'alésage central du compresseur LP (22) et dépasse axialement à l'arrière du compresseur LP (22) dans l'AGB (50), et le train d'engrenages (62) est disposé dans l'AGB (50) et est couplé en entraînement à une extrémité arrière de l'arbre LP (23).

5. Moteur à turbine à gaz à flux inversé (10) selon une quelconque revendication précédente, dans lequel le train d'engrenages (62) est un train d'engrenages double comprenant des première et seconde entrées d'entraînement sur le compresseur LP (22).

6. Moteur à turbine à gaz à flux inversé (10) selon une quelconque revendication précédente, dans lequel l'arbre LP (23) comporte une portion d'arbre de turbine motrice s'étendant vers l'avant par rapport au sens de déplacement (D) du moteur de la turbine LP (21) et une portion d'arbre de compresseur LP s'étendant vers l'arrière par rapport au sens de déplacement (D) du moteur depuis la turbine LP (21) vers un emplacement à l'arrière du compresseur LP (22).

7. Moteur à turbine à gaz à flux inversé (10) selon la revendication 6, dans lequel l'arbre LP (23) s'étend centralement à travers l'arbre HP (43), et l'arbre LP (23) est supporté par au moins un palier (52) monté dans une cavité interne (80) disposée entre le compresseur HP (42) et le compresseur LP (22) et radialement vers l'intérieur d'un chemin de gaz annulaire (18) entre le compresseur HP (42) et le compresseur LP (22).

8. Moteur à turbine à gaz à flux inversé (10) selon la revendication 7, dans lequel l'arbre HP (43) comprend une première section d'arbre (43a) dépassant à l'arrière du compresseur HP (42) et une seconde section d'arbre (43b) dépassant axialement à travers le compresseur LP (22) dans l'AGB (50), et un engrenage (54) est disposé dans la cavité interne (80) pour raccorder en entraînement la première section d'arbre (43a) à la seconde section d'arbre (43b).

9. Moteur à turbine à gaz à flux inversé (10) selon la revendication 8, dans lequel l'engrenage (54) est un engrenage conique (54) ayant un axe de rotation perpendiculaire à l'axe de moteur (17).

10. Moteur à turbine à gaz à flux inversé (10) selon une quelconque revendication précédente, comprenant un carter scindé incluant des première et seconde sections de carter séparables (82, 84) ayant une interface (86) entre le compresseur HP (42) et le compresseur LP (22) pour donner accès à une cavité interne (80) disposée radialement à l'intérieur d'un chemin de gaz annulaire (18) entre les compresseurs LP et HP (22 ; 42), la cavité interne (80) logeant au moins un palier (52) supportant l'arbre LP (23).

11. Moteur à turbine à gaz multi-corps (10) comprenant :
un corps basse pression (LP) (20) ; un corps haute pression (HP) (40), le corps LP (20) et le corps HP (40) pouvant tourner indépendamment l'un de l'autre autour d'un axe central (17), le corps LP (20) comprenant un compresseur LP (22) et une turbine LP (21), le corps HP (40) comprenant une turbine HP (41) et un compresseur HP (42) ; et
une boîte d'entraînement des accessoires (AGB) (50) raccordée en entraînement au corps HP (40) ;
dans lequel le corps LP (20) comprend un arbre LP (23) ;
et dans lequel le corps HP (40) comprend un arbre HP (43) raccordé en entraînement à la turbine HP (41), l'arbre HP (43) étant raccordé en entraînement à l'AGB (50) ;
**caractérisé en ce que**
le compresseur LP (22) est disposé axialement entre le compresseur HP (42) et l'AGB (50) ; et le moteur comprend en outre un train d'engrenages (62) couplant en entraînement le compresseur LP (22) à la turbine LP (21), le train d'engrenages (62) étant disposé sur un côté tourné vers l'AGB du compresseur LP (22) ; dans lequel l'arbre LP (23) s'étend axialement depuis la turbine LP (21) à travers un alésage central du compresseur LP (22) et est en prise d'entraînement avec le train d'engrenages (62) ;
dans lequel le compresseur LP (22) comporte une portion d'arbre de compresseur creuse (74) s'étendant concentriquement autour de l'arbre LP (23) sur le côté tourné vers l'AGB du compresseur LP (22), la portion d'arbre de compresseur creuse (74) étant raccordée en entraînement à l'arbre LP (23) par le train d'engrenages (62) ; et dans lequel l'arbre HP (43) s'étend axialement à travers l'alésage central du compresseur LP (22) entre l'arbre LP (23) et la portion d'arbre de compresseur creuse (74) du compresseur LP (22).

12. Moteur à turbine à gaz multi-corps (10) selon la revendication 11, dans lequel l'arbre LP (23) s'étend dans l'AGB (50) axialement au-delà de l'arbre HP (43) et la portion d'arbre de compresseur creuse (74) du compresseur LP (22), et l'arbre HP (43) se termine axialement entre la portion d'arbre de compresseur creuse (74) du compresseur LP (22) et l'arbre LP (23).

13. Moteur à turbine à gaz multi-corps (10) selon la revendication 11 ou 12, dans lequel l'arbre HP (43) comprend des première et seconde sections d'arbre (43a, b) couplées en entraînement par un engrenage conique (54) disposé dans une cavité (80) entre le compresseur HP (42) et le compresseur LP (22) radialement vers l'intérieur d'un chemin de gaz (18) entre les compresseurs HP et LP (42, 22).

14. Moteur à turbine à gaz multi-corps (10) selon l'une quelconque des revendications 11 à 13, dans lequel le moteur (10) est un moteur d'aéronef (10) ayant une configuration à flux inversé incluant une admission d'air (11) disposée à l'arrière du compresseur LP (22) le long d'un sens de déplacement du moteur d'aéronef (10), et l'AGB (50) est disposée à l'arrière de l'admission d'air (11).
